# EUROPÄISCHE PATENTSCHRIFT

(11) **EP 1 971 811 B1**
(45) Veröffentlichungstag und Bekanntmachung des Hinweises auf die Patenterteilung: **12.10.2016**
(21) Anmeldenummer: 07700199.8
(22) Anmeldetag: 08.01.2007
(51) Int. Cl.: F25D 17/04

(54) **LUFTKLAPPENVORRICHTUNG FÜR EIN KÜHL-ODER/UND GEFRIERGERÄT DER KÜCHENAUSSTATTUNG**
AIR-FLAP APPARATUS FOR A REFRIGERATOR OR/AND FREEZER IN A KITCHEN
DISPOSITIF A CLAPET D'AIR POUR REFRIGERATEUR ET/OU CONGELATEUR DE CUISINE

(30) Priorität: 12.01.2006 DE 102006001679
(43) Veröffentlichungstag der Anmeldung: 24.09.2008
(73) Patentinhaber: emz-Hanauer GmbH & Co. KGaA, 92507 Nabburg (DE)
(72) Erfinder: SPIESSL, Georg, 92540 Willhof-Altendorf (DE); DURFEE, Anthony, Granger, IN 46530 (US)
(74) Vertreter: Katérle, Axel
(86) Internationale Anmeldenummer: PCT/EP2007/000095
(87) Internationale Veröffentlichungsnummer: WO 2007/082649

(56) Entgegenhaltungen:
- GB-A- 1 026 533
- GB-A- 1 118 353
- JP-A- 1 028 471
- JP-A- 1 316 577
- JP-A- 1 318 877
- JP-A- 57 000 472
- JP-A- 62 024 083
- JP-A- 62 101 985
- JP-A- 62 283 275
- JP-A- 63 254 273
- US-A- 4 644 239
- US-A- 4 741 170
- US-A- 5 172 566

## Beschreibung

Die Erfindung betrifft eine Luftklappenvorrichtung für ein Kühl- oder/und Gefriergerät der Küchenausstattung, umfassend
- eine um eine erste Drehachse zwischen einer Offenstellung und einer Schließstellung schwenkbar gelagerte Luftklappe, welche in der Offenstellung eine Luftdurchtrittsöffnung für den Durchtritt von Luft freigibt und in der Schließstellung die Luftdurchtrittsöffnung zumindest im wesentlichen gegen Luftdurchtritt sperrt, und
- einen motorischen Klappenbetätigungsmechanismus zur Schwenkverstellung der Luftklappe.

Derartige Luftklappenvorrichtungen werden zur Steuerung der Zufuhr von Kaltluft in einen Kühlraum eines Kühl- oder/und Gefriergeräts für den Küchenhaushalt verwendet. In solchen Kühl- oder/und Gefriergeräten ist in der Regel mindestens ein Kühlraum vorhanden, in dem eine vorbestimmte Temperatur einzuhalten ist (der Begriff Kühlraum ist hier allgemein als ein kühl zu haltender Raum in dem Gerät zu verstehen, sei es über dem Gefrierpunkt oder unterhalb desselben, und soll deshalb insbesondere nicht in Abgrenzung zu einem Gefrierraum stehen, sondern einen solchen begrifflich umfassen). Abhängig von der gemessenen Temperatur in dem Kühlraum kann mittels einer Luftklappenvorrichtung der hier betrachteten Art der Zustrom verfügbarer Kaltluft in den Kühlraum gestattet oder unterbunden werden. Die Kaltluft kann beispielsweise aus einem relativ kälteren, weiteren Kühlraum des Kühl- oder/und Gefriergeräts stammen. So kann beispielsweise bei einem Kühl/Gefrier-Kombinationsgerät die Kaltluft aus einem Gefrierabteil des Geräts stammen und in ein Kühlabteil eingeleitet werden, das zur kühlen Aufbewahrung, jedoch nicht zum Gefrieren von Lebensmitteln dient. Ebenso ist es vorstellbar, in einem Kühlschrank oder einer Kühltruhe mit verschiedenen unterschiedlich kalt zu haltenden Kühlfächern Kaltluft von einem relativ kälteren der Kühlfächer über eine Luftklappenvorrichtung gesteuert in ein relativ wärmeres Kühlfach strömen zu lassen. Eine Beschränkung auf bestimmte Einsatzorte in einem Kühl- oder/und Gefriergerät ist im Rahmen der Erfindung nicht beabsichtigt.

Bekannte Ausführungsformen einer Luftklappenvorrichtung der obigen Art weisen einen elektrischen Antriebsmotor auf, der - im Regelfall über ein zwischengeschaltetes Getriebe - in fortwährender Drehantriebsverbindung mit einer eine Luftdurchtrittsöffnung stellungsabhängig verschließenden oder freigebenden Luftklappe gekoppelt ist. Ein Beispiel hierfür findet sich in US 5,018,364 und in JP 63254273, US 4741170. In ihrer Schließstellung muss die Luftklappe die Durchtrittsöffnung üblicherweise vergleichsweise dicht verschließen können. Eisbildung kann dann dazu führen, dass die Luftklappe an den Öffnungsrändern der Durchtrittsöffnung festfriert. Eisbildung kann zudem die Drehbeweglichkeit der für die Schwenklagerung der Luftklappe dienenden Komponenten beeinträchtigen. Da im Normalfall ein Öffnen der Luftklappe nur in vergleichsweise großen Zeitabständen erforderlich ist (groß jedenfalls im Vergleich zu der Zeit, in der sich Eis an den Komponenten der Luftklappenvorrichtung bilden kann), ist das Festfrieren der Luftklappe ein durchaus häufig anzutreffendes Problem. Ist jedoch die Luftklappe festgefroren, muss der Antriebsmotor ein entsprechend großes Moment aufbringen können, um die Vereisung aufzubrechen. Kann er dies nicht, ist aufgrund anhaltender zu starker Stromaufnahme eine Beschädigung des Motors möglich.

Aufgabe der Erfindung ist es, bei einer Luftklappenvorrichtung der eingangs bezeichneten Art eine erhöhte Funktionszuverlässigkeit zu ermöglichen.

Zur Lösung dieser Aufgabe ist erfindungsgemäß vorgesehen, dass der Klappenbetätigungsmechanismus der Luftklappenvorrichtung ein beweglich angeordnetes Klappenbetätigungselement mit einem Klappeneingriffsabschnitt umfasst, welcher durch Bewegung des Klappenbetätigungselements von außerhalb des Schwenkraums der Luftklappe in diesen hineinbewegbar ist, um dabei mit Bewegungsimpuls gegen die Luftklappe zu stoßen und diese aus einer der beiden Klappenstellungen in Richtung auf die andere auszuheben.

Bei der erfindungsgemäßen Lösung ist keine permanente Antriebskopplung zwischen der Luftklappe und einem Antriebsmotor des Klappenbetätigungsmechanismus vorhanden. Stattdessen ist ein bewegliches Klappenbetätigungselement vorgesehen, das von einem solchen Antriebsmotor antreibbar ist. Das Klappenbetätigungselement besitzt einen Klappeneingriffsabschnitt, welcher so angeordnet ist, dass er je nach Stellung des Klappenbetätigungselements außerhalb oder innerhalb des Schwenkraums der Luftklappe liegt. Das Klappenbetätigungselement Ist dabei so angeordnet, dass der Klappeneingriffsabschnitt von außerhalb des Schwenkraums der Luftklappe an diese herangefahren werden kann, bis er an die Luftklappe anstößt. Bei Weiterbewegung des Klappenbetätigungselements hebt der Klappeneingriffsabschnitt dann die Luftklappe aus ihrer Stellung aus, die sie bei Anstoßen des Klappeneingriffsabschnitts einnahm.

Ist die Luftklappe festgefroren, so kann das Klappenbetätigungselement dennoch bewegt werden, nämlich zumindest in einem Bereich, in dem sich der Klappeneingriffsabschnitt außerhalb des Schwenkraums der Luftklappe befindet. Dies kann dazu genutzt werden, dem Klappeneingriffsabschnitt einen Bewegungsimpuls mitzugeben, der bei Anstoßen des Klappeneingriffsabschnitts an der Luftklappe ein Aufbrechen der Vereisung erleichtert. Der Antriebsmotor muss demnach nicht aus dem Stillstand gegen einen durch Vereisung herbeigeführten Widerstand anlaufen, sondern kann sozusagen erst Schwung aufnehmen, bevor der Klappeneingriffsabschnitt auf die Luftklappe trifft. Dies schont den Antriebsmotor und erlaubt ein zuverlässigeres Aufbrechen etwaiger Vereisungen.

Bei einer bevorzugten Weiterbildung der Luftklappenvorrichtung ist das Klappenbetätigungselement um eine zur ersten Drehachse im wesentlichen parallele, jedoch im Abstand von dieser verlaufende zweite Drehachse drehbar angeordnet, wobei der Klappeneingriffsabschnitt durch Drehung des Klappenbetätigungselements von außerhalb des Schwenkraums der Luftklappe in diesen hineinbewegbar ist. Es soll gleichwohl im Rahmen der Erfindung nicht ausgeschlossen sein, das Klappenbetätigungselement mit anderer Beweglichkeit als Drehbeweglichkeit auszuführen. Beispielsweise könnte das Klappenbetätigungselement linearbeweglich sein.

Bei drehbarer Ausbildung des Klappenbetätigungselements kann dieses gemäß einer bevorzugten Ausführungsform derart angeordnet sein, dass durch Drehung des Klappenbetätigungselements der Klappeneingriffsabschnitt in den Schwenkraum der Luftklappe hinein, durch diesen hindurch und aus diesem wieder heraus bewegbar ist, wobei der Klappenbetätigungsmechanismus einen das Klappenbetätigungselement um die zweite Drehachse antreibenden elektrischen Antriebsmotor umfasst, welcher zum Betrieb in entgegengesetzten Drehrichtungen ausgelegt ist. Bei dieser Ausführungsform kann die Luftklappe in beiden Drehrichtungen des Antriebsmotors betätigt werden. Dies kann insbesondere dazu genutzt werden, bei festgefrorener Luftklappe den Antriebsmotor mehrmals hintereinander in wechselnder Drehrichtung zu betreiben, wenn ein einmaliges "Anklopfen" des Klappeneingriffsabschnitts an der Luftklappe noch nicht ausreicht, um die Vereisung zu lösen. Der Klappeneingriffsabschnitt kann so außerhalb des Schwenkbereichs der Luftklappe mehrmals hin und her bewegt werden, wobei er jedes Mal an der Luftklappe anstößt. Durch derartiges wiederholtes "Anklopfen" kann die Vereisung noch zuverlässiger gelöst werden.

Der Antriebsmotor kann beispielsweise ein Synchronmotor ohne Richtungshemmung in beiden Drehrichtungen sein. Bei geeigneter Ausgestaltung kann ein solcher Synchronmotor von sich aus eine Drehrichtungsumkehr vornehmen, wenn sich in einer Drehrichtung die Luftklappe nicht bewegen lässt. Vorstellbar ist selbstverständlich auch die Verwendung eines elektronisch gesteuerten Schrittmotors.

Vorzugsweise ist die Luftklappe in die eine der beiden Klappenstellungen vorgespannt, so dass der Antriebsmotor die Vorspannung überwinden muss, um die Luftklappe aus dieser Stellung auszuheben, wobei jedoch eine selbsttätige Rückstellung der Luftklappe stattfindet, wenn der Klappeneingriffsabschnitt des Klappenbetätigungselements sich aus dem Schwenkraum der Luftklappe wieder zurückzieht. Die Ausgangsstellung, in die die Luftklappe vorgespannt ist, ist zweckmäßigerweise ihre Schließstellung.

Der Klappenbetätigungsmechanismus kann in fester relativer Lage zu dem Klappeneingriffsabschnitt zur gemeinsamen Bewegung mit diesem angeordnete Steuerflächenmittel zur Steuerung eines mechanisch betätigbaren Schaltglieds mindestens eines elektrischen Schalters umfassen. Der elektrische Schalter kann dabei als Impulsgeber für eine einen Antriebsmotor des Klappenbetätigungsmechanismus steuernde elektronische Steuereinheit geschaltet sein. Abhängig von den Impulsen, welche durch Veränderung des Betätigungszustands des Schalters erzeugt werden können, kann dann die Steuereinheit die Betriebsenergiezufuhr zu dem Antriebsmotor steuern. Alternativ kann der elektrische Schalter in einem Betriebsenergieversorgungskreis für einen Antriebsmotor des Klappenbetätigungsmechanismus angeordnet sein, so dass der Schalter abhängig von seinem Betätigungszustand die Zufuhr von Betriebsenergie zu dem Antriebsmotor unterbrechen oder/und freigeben kann.

Bei einer Ausführungsform können die Steuerflächenmittel auf ein beweglich angeordnetes Zwischenglied einwirken, welches seinerseits auf das Schaltglied einwirkt. Dabei weisen die Steuerflächenmittel eine erste Steuerfläche auf, welche eine Einstellung des Zwischenglieds in eine erste Zwischengliedstellung gestattet oder bewirkt, in der das Schaltglied einen ersten Betätigungszustand einnimmt, sowie eine winkelversetzt zu der ersten Steuerfläche angeordnete zweite Steuerfläche, welche eine Einstellung des Zwischenglieds in eine zweite Zwischengliedstellung gestattet oder bewirkt, in der das Schaltglied einen von dem ersten Betätigungszustand verschiedenen zweiten Betätigungszustand einnimmt. Um das Zwischenglied in der ersten oder/und zweiten Zwischengliedstellung zu halten, selbst wenn die betreffende Steuerfläche nicht mehr auf das Zwischenglied einwirkt, kann das Zwischenglied durch Reibwirkung positionsträge angeordnet sein. Es ist auch vorstellbar, dass das Zwischenglied in Richtung auf eine seiner beiden Zwischengliedstellungen vorgespannt ist.

Das Zwischenglied kann beispielsweise von einem im Bereich eines seiner Enden schwenkbar gelagerten Hebelarms gebildet sein.

Bei einer anderen Ausführungsform können die Steuerflächenmittel ohne Verwendung eines Zwischenglieds unmittelbar auf das Schaltglied des Schalters einwirken.

Vorzugsweise umfassen die Steuerflächenmittel eine Steuerfläche, welche wenigstens näherungsweise bei Erreichen der anderen der beiden Klappenstellungen der Luftklappe eine Einstellung des Schaltglieds in einen geänderten Betätigungszustand gestattet oder bewirkt. Auf diese Weise kann das Erreichen dieser anderen Klappenstellung sicher erkannt werden, um dann die Bewegung der Luftklappe zu stoppen.

Um unterschiedliche Stellungen des Klappenbetätigungselements zuverlässig zu erkennen, können die Steuerflächenmittel zwei in unterschiedlichen Winkelbereichen angeordnete und in Winkelrichtung sich unterschiedlich lang erstreckende Steuerflächen umfassen, die jeweils eine Einstellung des Schaltglieds in denselben geänderten Betätigungszustand gestatten oder bewirken.

Für eine Betätigbarkeit der Luftklappe in beiden Drehrichtungen eines Antriebsmotors des Klappenbetätigungsmechanismus empfiehlt es sich, jede eine Einstellung des Schaltglieds in einen geänderten Betätigungszustand gestattende oder bewirkende Steuerfläche der Steuerflächenmittel in Bezug auf die Bewegungsrichtung des Klappenbetätigungselements symmetrisch auszubilden.

Die Steuerflächenmittel können integral an dem Klappenbetätigungselement ausgebildet sein, sie können alternativ aber auch an einem von dem Klappenbetätigungselement gesondert hergestellten Bauteil ausgebildet sein.

Die Erfindung wird nachfolgend anhand der beigefügten Zeichnungen weiter erläutert. Es stellen dar:
Figur 1 schematisch ein Ausführungsbeispiel einer erfindungsgemäßen Luftklappenvorrichtung in einer Schließstellung einer Luftklappe der Vorrichtung,
Figur 2 die Vorrichtung der Figur 1 in einer Offenstellung der Luftklappe, \
Figur 3 schematisch Komponenten zum Antrieb und zur Steuerung eines Klappenbetätigungselements der Vorrichtung der Figuren 1 und 2 gemäß einer Variante und
Figur 4 Komponenten zum Antrieb und zur Steuerung des Klappenbetätigungselements gemäß einer weiteren Variante.

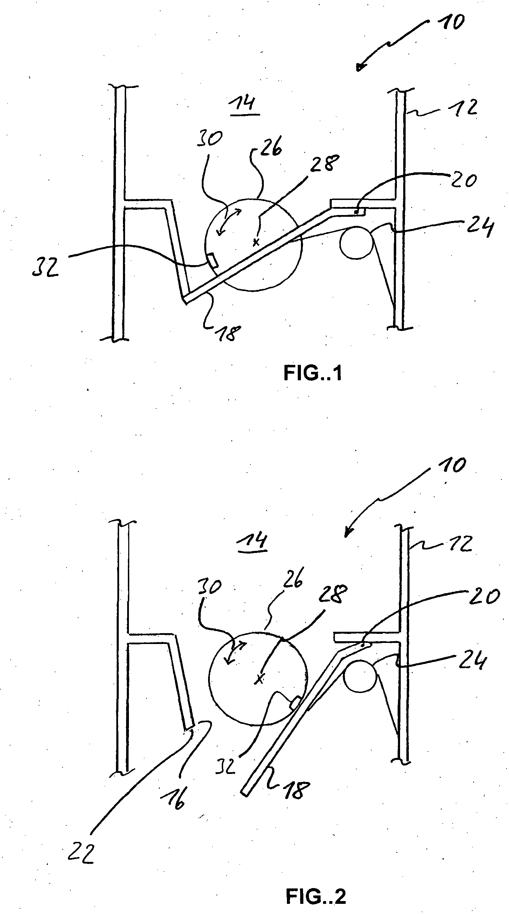

Es wird zunächst auf die Figuren 1 und 2 verwiesen. Die dort gezeigte, allgemein mit 10 bezeichnete Luftklappenvorrichtung ist zum Einbau in ein Kühl- oder/und Gefriergerät für die kühle Aufbewahrung oder das Einfrieren von Lebensmitteln vorgesehen. Im Einbauzustand gestattet sie das wahlweise Öffnen und Schließen eines Kaltluftkanals, durch den erzeugte oder verfügbare Kaltluft in einen Kühlraum des Geräts eingeleitet werden kann. Die Luftklappenvorrichtung 10 umfasst eine Gehäuseanordnung 12, welche den besagten Kaltluftkanal zumindest auf einem Teil seiner Länge begrenzt. In den Figuren 1 und 2 ist der Kaltluftkanal allgemein mit 14 bezeichnet. Die Gehäuseanordnung 12 bildet eine Durchtrittsöffnung 16, welche einen oberen Teil des Kaltluftkanals 14 von einem unteren Teil trennt und mittels einer Luftklappe 18 nach Bedarf verschlossen oder freigegeben werden kann. Die Luftklappe 18 ist um eine erste Drehachse 20 schwenkbar an der Gehäuseanordnung 12 gelagert, wobei sie zwischen einer in Figur 1 gezeigten Offenstellung und einer in Figur 2 gezeigten Schließstellung verstellbar ist. In der Offenstellung liegt die Luftklappe 18 an einem Öffnungsrand 22 der Durchtrittsöffnung 16 an und verschließt diese zumindest näherungsweise dicht.

Eine zwischen der Gehäuseanordnung 12 und der Luftklappe 18 wirksame Vorspannfeder 24 spannt die Luftklappe 18 in Richtung auf ihre Schließstellung vor. Grundsätzlich kann ein beliebiger Federtyp für die Vorspannfeder 24 verwendet werden. Im gezeigten Beispielfall der Figuren 1 und 2 ist sie von einer Wendelfeder gebildet, deren Wendelenden an der Gehäuseanordnung 12 bzw. der Luftklappe 18 abgestützt sind.

Zur Betätigung der Luftklappe 18, d.h. zu ihrer Überführung aus der Schließstellung in die Offenstellung, dient ein Klappenbetätigungsmechanismus, der ein mittels eines in den Figuren 1 und 2 nicht näher dargestellten elektrischen Antriebsmotors antreibbares Klappenbetätigungselement 26 umfasst. Dieses ist im gezeigten Beispielfall als ein Drehkörper ausgebildet, welcher um eine im Abstand von der ersten Drehachse 20 angeordnete, im Wesentlichen parallel zu dieser verlaufende zweite Drehachse 28 in beiden Drehrichtungen unbegrenzt drehbeweglich gelagert ist. Ein Doppelpfeil 30 verdeutlicht diese unbegrenzte Drehbeweglichkeit des Klappenbetätigungselements 26 in beiden Drehrichtungen.

Das Klappenbetätigungselement 26 ist mit einem schematisch angedeuteten Klappeneingriffsabschnitt 32 ausgeführt, welcher zum Eingriff mit der Luftklappe 18 bestimmt und ausgebildet ist. Die Anordnung des Klappenbetätigungselements 26 relativ zu der Luftklappe 18 ist derart, dass sich der Klappeneingriffsabschnitt 32 in einem Teil des Drehwinkelbereichs des Klappenbetätigungselements 26 innerhalb des Schwenkraums der Luftklappe 18 befindet, ansonsten jedoch außerhalb des Schwenkraums der Luftklappe 18 ist. Der Schwenkraum der Luftklappe 18 ist der von dieser zwischen ihrer Schließ- und ihrer Offenstellung begrenzte Raum. In der in Figur 1 gezeigten Schließstellung der Luftklappe 18 befindet sich der Klappeneingriffsabschnitt 32 außerhalb des Schwenkraums der Luftklappe 18. In der Offenstellung der Figur 2 hingegen ist der Klappeneingriffsabschnitt 32 in den Schwenkraum der Luftklappe 18 hineinbewegt.

Im gezeigten Beispielfall der Figuren 1 und 2 befindet sich das Klappenbetätigungselement 26 - bezogen auf die Drehachse 20 - axial neben der Luftklappe 18, wobei der Klappeneingriffsabschnitt 32 als ein Axialvorsprung ausgebildet ist, der von dem Klappenbetätigungselement 26 axial in Richtung zur Luftklappe 18 hin absteht und mit dieser axial überlappt. Wird das Klappenbetätigungselement 26 aus seiner in Figur 1 gezeigten Drehstellung im Gegenuhrzeigersinn um die zweite Drehachse 28 gedreht, nähert sich der Klappeneingriffsabschnitt 32 der Luftklappe 18 und stößt schließlich an diese an, nämlich linker Hand der Drehachse 28. Bei Weiterdrehung des Klappenbetätigungselements 26 im Gegenuhrzeigersinn hebt der Klappeneingriffsabschnitt 32 die Luftklappe 18 gegen die Wirkung der Vorspannfeder 24 aus der Schließstellung aus und drückt sie in Richtung auf ihre Offenstellung. Der maximale Öffnungsgrad der Luftklappe 18 ist erreicht, wenn eine gedachte Verbindungslinie zwischen der zweiten Drehachse 28 und dem Klappeneingriffsabschnitt 32 im Wesentlichen senkrecht zur Klappenebene der Luftklappe 18 steht. Der Klappeneingriffsabschnitt 32 ist dann maximal weit in den Schwenkraum der Luftklappe 18 hineinbewegt. Figur 2 stellt diesen Zustand näherungsweise dar.

Bei noch weiterer Drehung des Klappenbetätigungselements 26 im Gegenuhrzeigersinn bewegt sich der Klappeneingriffsabschnitt 32 wieder in Richtung aus dem Schwenkraum der Luftklappe 18 heraus. Die Vorspannkraft der Vorspannfeder 24 bewirkt dabei, dass die Luftklappe 18 dem Klappeneingriffsabschnitt 32 sozusagen hinterherläuft, bis sie in dem Moment, wenn der Klappeneingriffsabschnitt 32 den Schwenkraum der Luftklappe 18 wieder verlässt, an dem Öffnungsrand 22 anstößt und die Schließstellung gemäß Figur 1 wieder einnimmt.

Durch fortgesetzte Rotation des Klappenbetätigungselements 26 um die Drehachse 28 im Gegenuhrzeigersinn kann somit ein wiederholtes Öffnen und Schließen der Luftklappe 18 herbeigeführt werden. Aber auch bei Rotation in entgegengesetzter Drehrichtung, also im Uhrzeigersinn bei Betrachtung der Figuren 1 und 2, kann derselbe Effekt erreicht werden. Denn auch bei Drehung im Uhrzeigersinn bewegt sich der Klappeneingriffsabschnitt 32 von außerhalb des Schwenkraums der Luftklappe 18 in diesen hinein, durch diesen hindurch und anschließend wieder heraus. Bei Drehung des Klappenbetätigungselements 26 im Uhrzeigersinn trifft der Klappeneingriffsabschnitt 32 jedoch auf die Luftklappe 18 an einer Stelle, welche in Figur 1 rechter Hand der zweiten Drehachse 28 und somit näher bei der ersten Drehachse 20 liegt als im Fall einer Rotation im Gegenuhrzeigersinn. Wegen des kürzeren Hebels im Fall der Rotation im Uhrzeigersinn ist eine höhere Kraft erforderlich, um die Luftklappe 18 gegen die Wirkung der Vorspannfeder 24 ausheben zu können. Deshalb ist es zweckmäßig, als Vorzugsdrehrichtung des Klappenbetätigungselements 26 diejenige zu wählen, bei der der Klappeneingriffsabschnitt 32 weiter von der Drehachse 20 entfernt auf die Luftklappe 18 trifft und folglich günstigere Hebelverhältnisse vorliegen. Bei der Betrachtungsweise der Figuren 1 und 2 ist die Gegenuhrzeigerrichtung also die Vorzugsrichtung.

Ungeachtet der möglichen Wahl einer Vorzugsdrehrichtung für das Klappenbetätigungselement 26 gestatten der Antriebsmotor und die mechanische Antriebsverbindung zwischen dem Motor und dem Klappenbetätigungselement 26 zweckmäßigerweise einen Antrieb desselben in beiden Drehrichtungen. Dies kann vorteilhaft dazu genutzt werden, die Antriebsrichtung des Klappenbetätigungselements 26 umzukehren, wenn es in einer Drehrichtung auf einen zu hohen Widerstand stößt, etwa weil die Luftklappe 18 am Öffnungsrand 22 festgefroren ist oder weil Eisbildung die Drehbeweglichkeit des Luftklappenlagers erschwert. Die Drehrichtungsumkehr erlaubt dann ein wiederholtes "Anklopfen" des Klappeneingriffsabschnitts 32 an der Luftklappe 18 abwechselnd an einer von der Drehachse 20 weiter entfernten Stelle und einer näher bei dieser Achse liegenden Stelle der Klappe 18. Etwaige Vereisungen können durch eine solche wiederholte Stoßeinwirkung auf die Luftklappe 18 besser aufgebrochen werden. Besonders vorteilhaft ist, dass das Klappenbetätigungselement 26 in dem Drehwinkelbereich, in dem sich der Klappeneingriffsabschnitt 32 außerhalb des Schwenkraums der Luftklappe 18 befindet, Schwung aufnehmen kann. Je nach der Schnelle, mit der der Antriebsmotor anlaufen kann, kann dem Klappeneingriffsabschnitt 32 ein mehr oder weniger großer Bewegungsimpuls verliehen werden, der bei Anschlagen an die Türklappe 18 auf diese übertragen werden kann. Insgesamt lässt sich so eine hohe Funktionszuverlässigkeit der Luftklappenvorrichtung 10 auch unter den vergleichsweise harschen Temperaturbedingungen eines Kühl- oder/und Gefriergeräts gewährleisten.

In Abwandlung des Ausführungsbeispiels der Figuren 1 und 2 ist es vorstellbar, das Klappenbetätigungselement 26 im axialen Bereich der Luftklappe 18 außerhalb des Schwenkraums derselben anzuordnen und es mit einem radialen Vorsprung auszuführen, der als Klappeneingriffsabschnitt dient und bei Drehung des Klappenbetätigungselements in den Schwenkraum der Luftklappe 18 hineinläuft und dabei die Klappe aushebt.

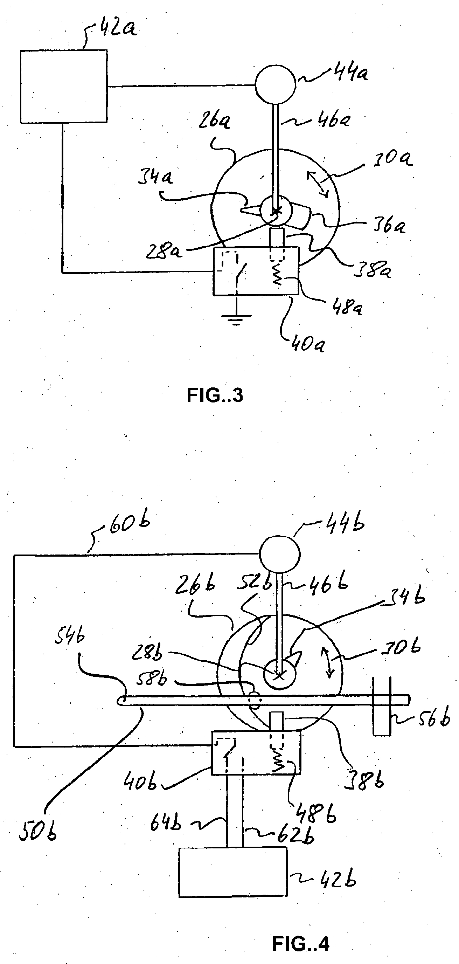

Die Figuren 3 und 4 illustrieren schematisch zwei Varianten zur Steuerung eines Antriebsmotors für das Klappenbetätigungselement 26 des Ausführungsbeispiels der Figuren 1 und 2. In allen Figuren sind gleiche oder gleichwirkende Komponenten mit gleichen Bezugszeichen versehen, wobei jedoch in den Figuren 3 und 4 zusätzlich ein Kleinbuchstabe angehängt ist.

Bei der Variante der Figur 3 trägt das Klappeneingriffselement 26 auf seiner von dem Klappeneingriffsabschnitt 32 der Figuren 1 und 2 axial abgewandten Seite zwei Steuerflächen 34a, 36a, welche in Bezug auf eine Drehung um die Achse 28a drehrichtungssymmetrisch ausgebildet sind, d.h. gleichen Konturverlauf in beiden Winkelrichtungen besitzen. Die beiden Steuerflächen 34a, 36a können alternativ an einem von dem Klappenbetätigungselement 26a gesonderten, jedoch zur gemeinsamen Drehung mit diesem angeordneten Steuerflächenträgerelement angeordnet sein. Sie sind in Winkelrichtung zueinander versetzt und überlappungsfrei. Ihre Winkelerstreckung ist unterschiedlich, wobei im gezeigten Beispielfall die Steuerfläche 34a kürzere Winkelerstreckung hat und die Steuerfläche 36a größere Winkelerstreckung hat.

Die Steuerflächen 34a, 36a gelangen bei Rotation des Klappenbetätigungselements 26a abwechselnd in Eingriff mit einem mechanischen Schaltglied 38a eines elektrischen Schalters 40a, welcher als Impulsgeber für eine elektronische Steuereinheit 42a dient. Die Steuereinheit 42a steuert abhängig von den elektrischen Impulsen, die sie über den Schalter 40a erhält, die Betriebsenergieversorgung eines elektrischen Antriebsmotors 44a, welcher über eine schematisch dargestellte mechanische Antriebsverbindung 46a das Klappenbetätigungselement 26a um die Drehachse 28a antreibt. Jedes Mal, wenn eine der Steuerflächen 34a, 36a auf das Schaltglied 38a aufläuft, drückt die betreffende Steuerfläche das Schaltglied 38a gegen die Wirkung einer Vorspannfeder 48a nieder, wobei sich der Betätigungszustand des Schalters 40a ändert. Nachdem die Steuerfläche an dem Schaltglied 38a vorbeigelaufen ist, stellt die Vorspannfeder 48a das Schaltglied 38a wieder in den vorherigen Ruhe-Betätigungszustand zurück. Die beiden Betätigungszustände des Schaltglieds 38 entsprechen unterschiedlichen elektrischen Zuständen des Schalters 40a, die zur Impulsformung genutzt werden. Abhängig davon, welche der Steuerflächen 34a, 36a auf das Schaltglied 38a trifft, liefert der Schalter 40a einen kürzeren oder längeren Impuls an die Steuereinheit 42a, da aufgrund der unterschiedlichen Winkellänge der Steuerflächen 34a, 36a das Schaltglied 38a - eine gleichbleibende Drehgeschwindigkeit des Klappenbetätigungselements 26a vorausgesetzt - für unterschiedlich lange Zeit in seinem niedergedrückten Zustand gehalten wird.

Die von dem Schalter 40a gelieferten Impulse gestatten der Steuereinheit 42a die Erkennung der Drehstellung des Klappenbetätigungselements 26a und folglich des Schwenkzustands der Luftklappe 18. Bevorzugt wird der durch die kürzere Steuerfläche 34a bewirkte kürzere Impuls zur Erkennung der Offenstellung der Luftklappe 18 verwendet. Hierzu ist die Steuerfläche 34a in Umfangsrichtung des Klappenbetätigungselements 26a derart relativ zu dem in Figur 3 nicht eingezeichneten Klappeneingriffsabschnitt 32 angeordnet, dass die Steuerfläche 34a das Schaltglied 38a niederdrückt, wenn die Luftklappe 18 von dem Klappeneingriffsabschnitt 32 maximal offengehalten wird. Die Winkelerstreckung der Steuerfläche 34a und damit die zeitliche Länge des durch diese erzeugten Impulses sind so kurz, dass Impulsbeginn und Impulsende nur kurz vor beziehungsweise kurz nach Erreichen der maximalen Offenstellung der Luftklappe 18 liegen. Die Steuereinheit 42a kann so sofort nach Erkennen des kürzeren Impulses die Betriebsenergiezufuhr zum Motor 44a stoppen und das Klappenbetätigungselement 26a anhalten.

Die Luftklappe 18 verharrt dann in ihrer Offenstellung, bis die Steuereinheit 42a abhängig von den Messsignalen einer nicht näher dargestellten Temperaturfühleranordnung entscheidet, dass die Luftklappe 18 wieder zu schließen ist. Sie stellt dann die Betriebsenergiezufuhr zum Antriebsmotor 44a wieder her. Dieser treibt das Klappenbetätigungselement 26a so weit an, bis die längere Steuerfläche 36a über das Schaltglied 38a hinweggelaufen ist und die Steuereinheit 42a dementsprechend den längeren Impuls erhalten hat. Nach Erkennen des längeren Impulses stoppt die Steuereinheit 42a die Betriebsenergiezufuhr zum Motor 44a erneut; das Klappenbetätigungselement 26 hält dann wieder an. Die relative Winkellage der längeren Steuerfläche 36a zum Klappeneingriffsabschnitt 32 des Klappenbetätigungselements 26a ist so gewählt, dass die Luftklappe 18 in ihre Schließstellung gemäß Figur 1 zurückkehrt, bevor die Steuerfläche 36a vollständig über das Schaltglied 38a hinweggefahren ist. Auf diese Weise wird sichergestellt, dass der Motor 44a einmal nahe der Offenstellung der Luftklappe 18 angehalten wird und einmal in der Schließstellung der Luftklappe 18. Wenn die Messsignale der Temperaturfühleranordnung anzeigen, dass weitere Kaltluftzufuhr nötig ist, stellt die Steuereinheit 42a die Betriebsenergiezufuhr zum Motor 44a wieder her. Das Klappenbetätigungselement 26a wird dann wieder so weit gedreht, bis die kürze Steuerfläche 34a das Schaltglied 38a überfahren hat, d.h. bis die Luftklappe 18 wieder geöffnet ist.

Hat der Antriebsmotor 44a gleichbleibende Drehgeschwindigkeit, kann eine der Steuerflächen 34a, 36a allein genügen, um der Steuereinheit 42a die Zeitsteuerung der Betriebsenergieversorgung des Motors 44a zu ermöglichen. Anhand des von der einen Steuerfläche erzeugten Impulses und der Drehgeschwindigkeit des Motors 44a kann die Steuereinheit 42a für jeden Zeitpunkt ermitteln, wo sich der Klappeneingriffsabschnitt 32 gerade befindet und in welcher Stellung die Luftklappe 18 ist. Zweckmäßigerweise wird bei Verwendung nur einer einzigen Steuerfläche auf die kürzere Steuerfläche 34a zurückgegriffen, da das Erkennen der Offenstellung der Luftklappe zeitkritischer als die Erkennung der Schließstellung ist.

Während bei der Variante der Figur 3 die Steuerflächen des Klappenbetätigungselements direkt mit dem Schaltglied des elektrischen Schalters zusammenwirken und der Schalter als Impulsgeber für die Steuereinheit verwendet wird, bedient sich die Variante der Figur 4 eines positionsträgen Zwischenglieds 50b zwischen Steuerflächen 34b, 52b des Klappenbetätigungselements 26b und dem Schaltglied 38b. Außerdem ist der Schalter 40b bei der Variante der Figur 4 in den Betriebsenergieversorgungskreis des Motors 44b integriert, so dass er abhängig von seinem Schaltzustand die Betriebsenergiezufuhr zu dem Motor 44b freigibt oder unterbricht.

Das Zwischenglied 50b ist als Hebelarm ausgebildet, welcher um eine zur Drehachse 28b des Klappenbetätigungselements 26b im Wesentlichen parallele, jedoch im Abstand von dieser angeordnete Schwenkachse 54b schwenkbar angeordnet ist. Der Hebelarm 50b ist insofern positionsträge, als er zwar schwenkbeweglich ist, jedoch in jeder Schwenkstellung infolge Reibwirkung positionsträge verharrt. Die Reibung kann an der Lagerstelle des Hebelarms 50b erzeugt werden. Bei der Variante der Figur 4 wird sie jedoch im Bereich des freien Endes des Hebelarms 50b erzeugt. Der Hebelarm 50b ist hierzu auf den federelastischen U-Schenkeln einer U-Feder 56b gleitend verschiebbar, wobei eine Vorspannung der Federschenkel für die gewünschte Reibung des Hebelarms 50b an den Federschenkeln sorgt.

Die Steuerfläche 34b bewirkt ähnlich der Steuerfläche 34a der Figur 3 ein Niederdrücken des Hebelarms 50b und infolgedessen des Schaltglieds 38b im Bereich der maximalen Offenstellung der Luftklappe. Die Positionsträgheit des Hebelarms 50b kann so groß sein, dass sie von der Vorspannfeder 48b des Schaltglieds 38b nicht überwunden werden kann, nachdem die Steuerfläche 34b an dem Hebelarm 50b vorbeigelaufen ist. Der Hebelarm 50b würde dann in seiner nach unten gedrückten Stellung verharren. Die Steuerfläche 52b ermöglicht eine Rückstellung des Hebelarms 50b nach oben. Sie wirkt gegensinnig zur Steuerfläche 34b und ist im Unterschied zu dieser zur Drehachse 28b des Klappenbetätigungselements 26b hin orientiert. Sie ist ebenfalls drehrichtungssymmetrisch ausgebildet, hat jedoch - bei Betrachtung in Umfangsrichtung - in ihrer Mitte geringsten Abstand von der Drehachse 28b und zu beiden Seiten hin zunehmend größeren Abstand. An dem Hebelarm 50b ist ein Zapfen 58b angeordnet, der in der nach unten gedrückten Stellung des Hebelarms 50b auf die Steuerfläche 52b bei Drehung des Klappenbetätigungselements 26b aufläuft. Das Zusammenwirken des Zapfens 58b und der Steuerfläche 52b bewirkt, dass der Hebelarm 50b nach oben zurückgestellt wird, so dass sich die Vorspannfeder 48b wieder entspannen kann und das Schaltglied 38b in seine ausgefahrene Stellung zurückkehrt.

Der Schalter 40b ist hier als Wechselschalter konfiguriert, welcher abhängig von seiner Schaltstellung eine zu dem Motor 44b führende Betriebsenergieversorgungsleitung 60b wahlweise mit einer von zwei Speiseleitungen 62b, 64b verbindet, die zwischen dem Schalter 40b und der Steuereinheit 42b verlaufen. Die Steuereinheit 42b ist dazu eingerichtet, wahlweise auf jeder der beiden Speiseleitungen 62b, 64b Betriebsenergie für den Motor 44b bereitzustellen. Die Funktionsweise des Klappenbetätigungsmechanismus gemäß Figur 4 ist wie folgt. Zeigen die Messwerte einer mit der Steuereinheit 42b verbundenen Temperaturfühleranordnung an, dass eine Kaltluftzufuhr benötigt wird und dementsprechend die Luftklappe 18 geöffnet werden soll, stellt die Steuereinheit 42b auf der in diesem Moment mit der Leitung 60b verbundenen Speiseleitung 62b oder 64b Betriebsenergie bereit. Mit Blick auf Figur 4 sei beispielhaft angenommen, dass dies die Speiseleitung 64b ist. Der über die Leitungen 64b, 60b so mit Betriebsenergie versorgte Motor 44b treibt dann das Klappenbetätigungselement 64b beispielsweise im Uhrzeigersinn an, bis die Steuerfläche 34b auf den Hebelarm 50b aufläuft und diesen nach unten drückt. Das damit einhergehende Niederdrücken des Schaltglieds 38b bewirkt ein Umschalten des Schalters 40b und damit eine Unterbrechung der Betriebsenergieversorgung des Motors 44b. Das Klappenbetätigungselement 26b bleibt in einer Position stehen, in der die Luftklappe 18 geöffnet ist. Sobald die Messsignale der Temperaturfühleranordnung eine hinreichende Abkühlung des mit der Kaltluft versorgten Kühlraums signalisieren, stellt die Steuereinheit 42b auf der anderen der beiden Speiseleitungen, also beispielsweise der Speiseleitung 62b, Betriebsenergie bereit, die wiederum ein Anlaufen des Motors 44b bewirkt. Das Klappenbetätigungselement 26b beginnt daher, sich erneut zu drehen, wobei die Luftklappe 18 in ihre Schließstellung zurückfällt und der Zapfen 58b des Hebelarms 50b auf die Steuerfläche 52b aufläuft. Sobald der Hebelarm 50b genügend nach oben zurückgestellt ist, um ein Umspringen des Schaltzustands des Schalters 40b zu gestatten, fließt kein Strom mehr zu dem Motor 44b, weshalb dieser stehen bleibt.

Der Antriebsmotor 44a der Figur 3 beziehungsweise 44b der Figur 4 ist bevorzugt ein mit Wechselstrom betriebener Synchronmotor, der sich in beiden Drehrichtungen ungehemmt antreiben lässt und bei Auftreten eines übermäßig hohen Drehwiderstands, wie er bei Vereisung der Luftklappe auftreten kann, zu einer selbsttätigen Drehrichtungsumkehr fähig ist. Auf diese Weise kann die weiter oben angesprochene Hin- und Herbewegung des Klappenbetätigungselements bis zum jeweiligen Anstoßen an der Luftklappe ohne zusätzliche elektronische Steuerungsmittel realisiert werden. Als Alternative zu einem Synchronmotor ist es vorstellbar, einen gesteuerten Schrittmotor zu verwenden. Ein übermäßig hoher Widerstand kann dabei über die Stromaufnahme des Motors erkannt werden und von der Steuereinheit in einen Befehl zur Drehrichtungsumkehr umgesetzt werden.

In Abwandlung des Ausführungsbeispiels der Figur 4 ist es vorstellbar, den Hebelarm 50b mittels einer nicht näher dargestellten Vorspannfeder in eine Schwenkrichtung vorzuspannen, beispielsweise in Richtung auf das Schaltglied 38b. An dem Klappenbetätigungselement 26b ist dann zumindest eine Steuerfläche vorgesehen, mittels der der Hebelarm 50b aus seiner Vorspannstellung wegziehbar oder -drückbar ist. Gewünschtenfalls können eine oder mehrere weitere Steuerflächen an dem Klappenbetätigungselement 26b vorgesehen sein, die ein rasches Zurückfallen des Hebelarms 50b in die Vorspannstellung unterstützen.

## Patentansprüche

1. Luftklappenvorrichtung für ein Kühl- oder/und Gefriergerät der Küchenausstattung, umfassend
- eine um eine erste Drehachse (20) zwischen einer Offenstellung und einer Schließstellung schwenkbar gelagerte Luftklappe (18), welche in der Offenstellung eine Luftdurchtrittsöffnung (16) für den Durchtritt von Luft freigibt und in der Schließstellung die Luftdurchtrittsöffnung zumindest im wesentlichen gegen Luftdurchtritt sperrt, und
- einen motorischen Klappenbetätigungsmechanismus zur Schwenkverstellung der Luftklappe,
**dadurch gekennzeichnet, dass** der Klappenbetätigungsmechanismus ein beweglich angeordnetes Klappenbetätigungselement (26) mit einem Klappeneingriffsabschnitt (32) umfasst, welcher durch Bewegung des Klappenbetätigungselements von außerhalb des Schwenkraums der Luftklappe in diesen hineinbewegbar ist, um dabei mit Bewegungsimpuls gegen die Luftklappe zu stoßen und diese aus einer der beiden Klappenstellungen in Richtung auf die andere auszuheben.

2. Luftklappenvorrichtung nach Anspruch 1,
**dadurch gekennzeichnet, dass** das Klappenbetätigungselement (26) um eine zur ersten Drehachse (20) im wesentlichen parallele, jedoch im Abstand von dieser verlaufende zweite Drehachse (28) drehbar angeordnet ist und dass der Klappeneingriffsabschnitt (32) durch Drehung des Klappenbetätigungselements von außerhalb des Schwenkraums der Luftklappe in diesen hineinbewegbar ist.

3. Luftklappenvorrichtung nach Anspruch 2,
**dadurch gekennzeichnet, dass** das Klappenbetätigungselement (26) derart angeordnet ist, dass durch Drehung des Klappenbetätigungselements der Klappeneingriffsabschnitt (32) in den Schwenkraum der Luftklappe (18) hinein, durch diesen hindurch und aus diesem wieder heraus bewegbar ist, und dass der Klappenbetätigungsmechanismus einen das Klappenbetätigungselement um die zweite Drehachse (28) antreibenden elektrischen Antriebsmotor (44a; 44b) umfasst, welcher zum Betrieb in entgegengesetzten Drehrichtungen ausgelegt ist.

4. Luftklappenvorrichtung nach einem der vorhergehenden Ansprüche,
**dadurch gekennzeichnet, dass** die Luftklappe (18) in die eine der beiden Klappenstellungen vorgespannt ist.

5. Luftklappenvorrichtung nach Anspruch 4,
**dadurch gekennzeichnet, dass** die vorgespannte Stellung die Schließstellung der Luftklappe (18) ist.

6. Luftklappenvorrichtung nach einem der vorhergehenden Ansprüche,
**dadurch gekennzeichnet, dass** der Klappenbetätigungsmechanismus in fester relativer Lage zu dem Klappeneingriffsabschnitt (32) zur gemeinsamen Bewegung mit diesem angeordnete Steuerflächenmittel (34a, 36a; 34b, 52b) zur Steuerung eines mechanisch betätigbaren Schaltglieds (38a; 38b) mindestens eines elektrischen Schalters (40a; 40b) umfasst.

7. Luftklappenvorrichtung nach Anspruch 6,
**dadurch gekennzeichnet, dass** der elektrische Schalter (40a) als Impulsgeber für eine einen Antriebsmotor (44a) des Klappenbetätigungsmechanismus steuernde elektronische Steuereinheit (42a) geschaltet ist.

8. Luftklappenvorrichtung nach Anspruch 6,
**dadurch gekennzeichnet, dass** der elektrische Schalter (40b) in einem Betriebsenergieversorgungskreis für einen Antriebsmotor (44b) des Klappenbetätigungsmechanismus angeordnet ist.

9. Luftklappenvorrichtung nach einem der Ansprüche 6 bis 8,
**dadurch gekennzeichnet, dass** die Steuerflächenmittel unmittelbar auf das Schaltglied (38a) des Schalters (40a) einwirken oder auf ein beweglich angeordnetes Zwischenglied (50b) einwirken, welches seinerseits auf das Schaltglied (38b) einwirkt, wobei die Steuerflächenmittel eine erste Steuerfläche (34b) aufweisen, welche eine Einstellung des Zwischenglieds in eine erste Zwischengliedstellung gestattet oder bewirkt, in der das Schaltglied einen ersten Betätigungszustand einnimmt, und wobei die Steuerflächenmittel eine winkelversetzt zu der ersten Steuerfläche angeordnete zweite Steuerfläche (52b) aufweisen, welche eine Einstellung des Zwischenglieds in eine zweite Zwischengliedstellung gestattet oder bewirkt, in der das Schaltglied einen von dem ersten Betätigungszustand verschiedenen zweiten Betätigungszustand einnimmt.

10. Luftklappenvorrichtung nach Anspruch 9,
**dadurch gekennzeichnet, dass** das Zwischenglied (50b) durch Reibwirkung positionsträge angeordnet ist.

11. Luftklappenvorrichtung nach Anspruch 9 oder 10,
**dadurch gekennzeichnet, dass** das Zwischenglied (50b) von einem im Bereich eines seiner Enden schwenkbar gelagerten Hebelarm gebildet ist.

12. Luftklappenvorrichtung nach einem der Ansprüche 6 bis 11,
**dadurch gekennzeichnet, dass** die Steuerflächenmittel eine Steuerfläche (34a; 34b) umfassen, welche wenigstens näherungsweise bei Erreichen der anderen der beiden Klappenstellungen der Luftklappe (18) eine Einstellung des Schaltglieds in einen geänderten Betätigungszustand gestattet oder bewirkt.

13. Luftklappenvorrichtung nach einem der Ansprüche 6 bis 12,
**dadurch gekennzeichnet, dass** die Steuerflächenmittel zwei in unterschiedlichen Winkelbereichen angeordnete und in Winkelrichtung sich unterschiedlich lang erstreckende Steuerflächen (34a, 36a) umfassen, die jeweils eine Einstellung des Schaltglieds (38a) in denselben geänderten Betätigungszustand gestatten oder bewirken.

14. Luftklappenvorrichtung nach einem der Ansprüche 6 bis 13,
**dadurch gekennzeichnet, dass** jede eine Einstellung des Schaltglieds (38a; 38b) in einen geänderten Betätigungszustand gestattende oder bewirkende Steuerfläche (34a, 36a; 36b, 52b) der Steuerflächenmittel in Bezug auf die Bewegungsrichtung des Klappenbetätigungselements symmetrisch ausgebildet ist.

15. Luftklappenvorrichtung nach einem der Ansprüche 6 bis 14,
**dadurch gekennzeichnet, dass** die Steuerflächenmittel (34a, 36a; 34b, 52b) integral an dem Klappenbetätigungselement (26a; 26b) ausgebildet sind.

## Claims

1. An air flap device for a cooling and/or refrigerating appliance of the kitchen equipment, comprising:
- an air flap (18) which is mounted so as to be pivotable about a first axis of rotation (20) between an open position and a closed position, which in the open position unblocks an air passage aperture (16) for the passage of air and in the closed position blocks said air passage aperture at least substantially against the passage of air, and
- a motorised flap actuating mechanism for pivotably adjusting the air flap,
**characterised in that** the flap actuating mechanism comprises a movably disposed flap actuating element (26) having a flap engaging section (32) which may be moved from outside the pivoting space of the air flap into it as a result of movement of the flap actuating element in order to thereby collide with an impulse of movement with the air flap and to lift it from one of the two flap positions towards the other one.

2. The air flap device according to Claim 1,
**characterised in that** the flap actuating element (26) is disposed so as to be rotatable about a second axis of rotation (28) which is substantially parallel to the first axis of rotation (20) but extends at a distance from the latter, and that the flap engaging section (32) may be moved from outside the pivoting space of the air flap into it as a result of rotation of the flap actuating element.

3. The air flap device according to Claim 2,
**characterised in that** the flap actuating element (26) is disposed in such a way that the flap engaging section (32) may be moved into the pivoting space of the flap (18), through said space and out of it again as a result or rotation of the flap actuating element, and that the flap actuating mechanism comprises an electric drive motor (44a; 44b) which drives the flap actuating element about the second axis of rotation (28) and which is designed to operate in opposite directions of rotation.

4. The air flap device according to one of the previous claims,
**characterised in that** the air flap (18) is pretensioned into one of the two flap positions.

5. The air flap device according to Claim 4,
**characterised in that** the pretensioned position is the closed position of the air flap (18).

6. The air flap device according to one of the previous claims,
**characterised in that** the flap actuating mechanism comprises control face means (34a, 36a; 34b, 52b) which are disposed in a fixed relative position to the flap engaging section (32) for the joint movement with the latter for the purpose of controlling a mechanically actuatable switching member (38a; 38b) of at least one electrical switch (40a; 40b).

7. The air flap device according to Claim 6,
**characterised in that** the electrical switch (40a) is connected as a pulse generator for an electronic control unit (42a) which controls a driving motor (44a) of the flap actuating mechanism.

8. The air flap device according to Claim 6,
**characterised in that** the electrical switch (40a) is disposed in an operating energy supply circuit for a driving motor (44b) of the flap actuating mechanism.

9. The air flap device according to one of Claims 6 to 8,
**characterised in that** the control face means directly act upon the switching member (38a) of the switch (40a) or on a movably disposed intermediate member (50b) which in turn acts upon the switching member (38b), wherein the control face means comprise a first control face (34b) which allows or brings about a setting of the intermediate member into a first position of the intermediate member, in which the switching member assumes a first actuating state, and wherein the control face means comprise a second control face (52b) which is disposed angularly offset relative to the first control face, which allows or brings about a setting of the intermediate member into a second position of the intermediate member, in which the switching member assumes a second actuating state which is different from the first actuating state.

10. The air flap device according to Claim 9,
**characterised in that** the intermediate member (50b) is disposed so as to be positionally inert as a result of the action of friction.

11. The air flap device according to Claim 9 or 10,
**characterised in that** the intermediate member (50b) is formed by lever arm which is pivotably mounted in the region of one of its ends.

12. The air flap device according to one of Claims 6 to 11,
**characterised in that** the control face means comprise a control face (34a; 34b) which permits or brings about at least approximately a setting of the switching member into a modified actuating state upon reaching the other two flap positions of the air flap (18).

13. The air flap device according to one of Claims 6 to 12,
**characterised in that** the control face means comprise two control faces (34a, 36a) which are disposed in different angular ranges and extend over different lengths and which respectively permit or bring about a setting of the switching member (38a) into the same modified actuating state.

14. The air flap device according to one of Claims 6 to 13,
**characterised in that** each control face (34a, 36a; 34b, 52b) of the control face means that permits or brings about a setting of the switching member (38a; 38b) into a modified actuating state is constructed symmetrically with respect to the direction of movement of the flap actuating element.

15. The air flap device according to one of Claims 6 to 14,
**characterised in that** the control face means (34a, 36a; 34b, 52b) are formed integrally on the flap actuating element (26a; 26b).

## Revendications

1. Dispositif à clapet d'air pour réfrigérateur et/ou pour congélateur de cuisine, comprenant :
- un clapet d'air (18) monté pivotant autour d'un premier axe de rotation (20) entre une position d'ouverture et une position de fermeture, lequel clapet, en position d'ouverture, libère une ouverture (16) pour le passage de l'air et, en position de fermeture, bloque ladite ouverture de passage de l'air pour empêcher au moins substantiellement l'air de passer, et
- un mécanisme motorisé d'actionnement de clapet servant à faire pivoter le clapet d'air,
**caractérisé en ce que** le mécanisme d'actionnement de clapet comprend un élément d'actionnement de clapet (26) agencé de manière mobile et pourvu d'une partie de mise en prise (32) pouvant être amenée dans l'espace de pivotement du clapet d'air lorsque l'élément d'actionnement de clapet se déplace depuis l'extérieur pour venir ce faisant percuter le clapet d'air sous l'effet d'une impulsion de mouvement et déloger celui-ci de l'une de ses deux positions pour le faire se déplacer en direction de l'autre.

2. Dispositif à clapet d'air selon la revendication 1,
**caractérisé en ce que** l'élément d'actionnement (26) est disposé mobile en rotation autour d'un deuxième axe de rotation (28) sensiblement parallèle au premier axe de rotation (20) mais situé à distance de ce dernier et **en ce que** la partie de mise en prise (32) du clapet peut être amenée dans l'espace de pivotement du clapet par rotation de l'élément d'actionnement de clapet depuis l'extérieur de l'espace de pivotement du clapet d'air.

3. Dispositif à clapet d'air selon la revendication 2,
**caractérisé en ce que** l'élément d'actionnement de clapet (26) est disposé de sorte que la partie de mise en prise de clapet (32) peut être amenée par rotation de l'élément d'actionnement de clapet dans l'espace de pivotement du clapet d'air (18) pour le traverser et en sortir à nouveau, et **en ce que** le mécanisme d'actionnement de clapet comprend un moteur d'entraînement (44a; 44b) électrique entraînant l'élément d'actionnement de clapet autour du second axe de rotation (28), lequel moteur est conçu pour fonctionner dans des sens de rotation opposés.

4. Dispositif à clapet d'air selon l'une des revendications précédentes,
**caractérisé en ce que** le clapet d'air (18) est précontraint dans une des deux positions de clapet.

5. Dispositif à clapet d'air selon la revendication 4,
**caractérisé en ce que** la position de précontrainte représente la position de fermeture du clapet d'air (18).

6. Dispositif à clapet d'air selon l'une des revendications précédentes,
**caractérisé en ce que** le mécanisme d'actionnement de clapet comporte des moyens à cames disposés dans une position fixe par rapport à la partie de mise en prise (32) pour un déplacement conjoint avec celle-ci et destinés à commander un organe de commutation (38a ; 38b) d'au moins un commutateur électrique (40a ; 40b).

7. Dispositif à clapet d'air selon la revendication 6,
**caractérisé en ce que** le commutateur électrique (40a) est commuté en tant que donneur d'impulsions pour une unité de commande électronique (42a) commandant un moteur d'entraînement (44a) du mécanisme d'actionnement de clapet.

8. Dispositif à clapet d'air selon la revendication 6,
**caractérisé en ce que** le commutateur électrique (40b) est disposé dans un circuit d'alimentation en énergie de service pour un moteur d'entraînement (44b) du mécanisme d'actionnement de clapet.

9. Dispositif à clapet d'air selon l'une des revendications 6 à 8,
**caractérisé en ce que** les moyens à cames agissent directement sur l'organe de commutation (38a) du commutateur (40a) ou sur un organe intermédiaire (50b) disposé de manière mobile, lequel organe intermédiaire agit à son tour sur l'organe de commutation (38b), les moyens à cames présentant une première came (34b) laquelle autorise ou a pour effet un réglage de l'organe intermédiaire dans une première position d'organe intermédiaire, dans laquelle l'organe de commutation accède à un premier état d'actionnement, et les moyens à cames présentant une deuxième came (52b) disposée en décalage angulaire par rapport à la première came, laquelle deuxième came autorise ou a pour effet un réglage de l'organe intermédiaire dans une deuxième position d'organe intermédiaire, dans laquelle l'organe de commutation accède à un deuxième état d'actionnement différent du premier état d'actionnement.

10. Dispositif à clapet d'air selon la revendication 9,
**caractérisé en ce que** l'organe intermédiaire (50b) est disposé inerte en position par effet de frottement.

11. Dispositif à clapet d'air selon la revendication 9 ou 10,
**caractérisé en ce que** l'organe intermédiaire (50b) est formé par un bras de levier monté pivotant dans la zone d'une de ses extrémités.

12. Dispositif à clapet d'air selon l'une des revendications 6 à 11,
**caractérisé en ce que** les moyens à cames comportent une came qui autorise ou a pour effet pour le moins approximativement un réglage de l'organe de commutation dans un état d'actionnement modifié lorsqu'est atteinte l'autre des deux positions du clapet d'air (18).

13. Dispositif à clapet d'air selon l'une des revendications 6 à 12,
**caractérisé en ce que** les moyens à cames comportent deux cames (34a, 36a) qui sont disposées dans des zones angulaires différentes et s'étendent angulairement sur des longueurs différentes, lesquelles cames autorisent ou ont chacune pour effet un réglage de l'organe de commutation (38a) selon le même état d'actionnement modifié.

14. Dispositif à clapet d'air selon l'une des revendications 6 à 13,
**caractérisé en ce que** chaque came (34a, 36a ; 36b, 52b) des moyens à cames, qui autorise ou a pour effet un réglage de l'organe de commutation dans un état d'actionnement modifié est réalisée de manière symétrique par rapport au sens de mouvement de l'élément d'actionnement de clapet.

15. Dispositif à clapet d'air selon l'une des revendications 6 à 14,
**caractérisé en ce que** les moyens à cames (34a, 36a ; 34b, 52b) sont réalisés d'un seul tenant avec l'élément d'actionnement de clapet (26a; 26b).
